# EUROPEAN PATENT SPECIFICATION

(11) **EP 3 276 632 B1**
(45) Date of publication and mention of the grant of the patent: **07.06.2023**
(21) Application number: 16768265.7
(22) Date of filing: 23.02.2016
(51) Int. Cl.: B60L 50/51, H01G 4/20, H01G 4/32, H01B 3/44, C08J 5/18, C08L 23/18, C08L 65/00, H01G 2/04, H01G 4/18, H01G 4/38, C08L 67/03, H01B 3/42

(54) **DIELECTRIC FILM, AND FILM CAPACITOR, CONNECTIVE CAPACITOR, INVERTER, AND ELECTRIC VEHICLE EACH INCLUDING SAME**
DIELEKTRISCHER FILM UND FILMKONDENSATOR, VERBINDUNGSKONDENSATOR, WECHSELRICHTER UND ELEKTROFAHRZEUG DAMIT
FILM DIÉLECTRIQUE, ET CONDENSATEUR À FILM, CONDENSATEUR DE CONNEXION, ONDULEUR ET VÉHICULE ÉLECTRIQUE LE COMPRENANT

(30) Priority: 26.03.2015 JP 2015064646; 26.05.2015 JP 2015106525; 21.10.2015 JP 2015207305
(43) Date of publication of application: 31.01.2018
(73) Proprietor: Kyocera Corporation, Kyoto-shi, Kyoto 6128501 (JP)
(72) Inventor: OKOUCHI,Akira, Kyoto-shi Kyoto 612-8501 (JP); IMAGAWA,Kazuki, Kyoto-shi Kyoto 612-8501 (JP)
(74) Representative: Viering, Jentschura & Partner mbB Patent- und Rechtsanwälte
(86) International application number: PCT/JP2016/055249
(87) International publication number: WO 2016/152362

(56) References cited:
- WO-A1-98/58987
- WO-A1-2015/133473
- JP-A- H1 017 658
- JP-A- H1 160 971
- JP-A- H1 160 971
- JP-A- H10 151 709
- JP-A- 2000 103 870
- JP-A- 2000 103 870
- JP-A- 2002 064 030
- JP-A- 2011 096 916
- JP-A- 2011 096 916
- JP-A- 2011 201 041
- JP-A- 2013 131 323
- JP-A- 2013 131 323
- JP-A- 2013 243 282
- JP-A- 2014 203 987
- JP-A- 2015 183 181
- US-A- 6 017 616
- US-A1- 2011 300 393

## Description

### Technical Field

The present invention relates to a dielectric film, a film capacitor and a combination type capacitor employing the dielectric film, and an inverter and an electric vehicle.

### Background Art

For example, a film capacitor is constructed of a dielectric film of polypropylene resin in film-like form having a vapor-deposited metallic membrane on its surface as an electrode. With this construction, in the event of electrical short-circuiting in an insulation defective area of the dielectric film, the metallic membrane located around the defective area is vaporized for release under short-circuiting-induced energy, causing electrical insulation, with the consequence advantage to prevent dielectric breakdown of the film capacitor (for example, refer to Patent Literature 1).

The film capacitor is hence capable of preventing ignition and electric shock entailed by electrical short-circuiting in an electric circuit. The film capacitor, being noteworthy for such a capability, has recently been applied to a power circuit of LED (Light Emitting Diode) illumination, and has also been put to an increasingly wider range of uses, including applications to motorized drive for a hybrid electric vehicle, and an inverter system for photovoltaic power generation (for example, refer to Patent Literature 2).

However, on a substrate on which various electronic components are mounted, the film capacitor still has a large size as compared with other electronic component such as a ceramic capacitor, and inconveniently, the placement of the film capacitor may constitute an impediment to accomplishment of low-profile design and higher packaging density of the substrate. Consequently, studies have been carried out on development of a smaller version of the film capacitor.

JP 2013 131323 A discloses a biaxial oriented film for electric insulation that includes polyethylene naphthalene decarboxylate, polyarylate, and an oxidation inhibitor; JP H11 60971 A discloses a porous film comprising a high-molecular-weight polyethylene resin and an ultra-high-molecular-weight polyethylene resin;
JP 2000 103870 A discloses a film comprising a thermoplastic resin composition containing a thermoplastic resin and a filler; US 6017616 A discloses a multilayer film having a base layer formed from a cycloolefin polymer and an outer layer formed from a mixture of cycloolefin polymers; JP 2011 096916 A discloses a capacitor and a power converter comprising the same; and US 2011/300393 A1 discloses a dielectric film including a three-dimensional crosslinked body that is synthesized from an organic metal compound, a rubber polymer, and an inorganic filler.

### Citation List

### Patent Literature

Patent Literature 1: Japanese Unexamined Patent Publication JP-A 9-129475 (1997)
Patent Literature 2: Japanese Unexamined Patent Publication JP-A 2010-178571

### Summary of Invention

The present invention provides a dielectric film according to claim 1, a film capacitor according to claim 11, a combination type capacitor according to claim 12, an inverter according to claim 13, an inverter according to claim 14, and an electric vehicle according to claim 15. Preferred embodiments are described in the dependent claims.

### Brief Description of Drawings

FIG. 1(a) is a sectional view schematically showing a structure of a dielectric film having an electrode film on its both principal faces, and FIG. 1(b) is an external perspective view schematically showing the configuration of a film capacitor according to a first embodiment;
FIG. 2 is a developed perspective view schematically showing the configuration of a film capacitor according to a second embodiment;
FIG. 3 is a perspective view schematically showing the structure of one embodiment of a combination type capacitor;
FIG. 4 is a schematic block diagram for explaining the structure of one embodiment of an inverter; and
FIG. 5 is a schematic block diagram showing one embodiment of an electric vehicle.

### Description of Embodiments

A dielectric film according to an embodiment of the invention comprises an organic resin polymer, being hereafter also called simply "polymer", and an organic resin monomer (organic resin component), being hereafter also called simply "monomer". The polymer is a major constituent of the dielectric film. As used herein, a major constituent of the dielectric film refers to a component which constitutes 70% or above by mass of the dielectric film.

In the dielectric film according to the embodiment, the polymer is at least one of polyarylate and cycloolefin polymer. The monomer is at least one of phenol monomer (phenol compound), sulfur monomer (sulfur compound), and phosphorus monomer (phosphorous compound).

A total monomer content falls in the range of 0.01 to 7.5 parts by mass in which the content of the polymer in the dielectric film is 100 parts by mass.

With the addition of a predetermined content of the aforementioned monomer to the dielectric film containing at least one of polyarylate and cycloolefin polymer as a major constituent, the breakdown field strength of the dielectric film can be enhanced. For example, When the breakdown field strength of a monomer-free dielectric film is 1, the breakdown field strength of the dielectric film according to the embodiment is 1.002 or more times as great.

Thus, the addition of a predetermined content of the aforementioned monomer to the dielectric film containing at least one of polyarylate and cycloolefin polymer as a major constituent makes it possible to enhance the breakdown field strength of the dielectric film. This is because the aforementioned monomer has a site capable of trapping of electric charges. For example, when an electric field is applied to the dielectric film, presumably, at least part of electric charges suspended in the dielectric film is trapped by the monomer dispersed in the dielectric film (this phenomenon may be hereafter referred to as "electric-charge trapping effect"), with consequent suppression of localized electric field.

Thus, enhancement in the breakdown field strength (dielectric strength) of the dielectric film allows reduction in the layer thickness of the dielectric film, and the dielectric film can hence be used as a dielectric film having an average thickness of less than or equal to 5 um, or, in particular, an average thickness of 1 um to 5 um. The use of such a thin-layer dielectric film allows reduction in the number of stacked layers or turns of the dielectric film. This makes it possible to reduce a size of a film capacitor.

Moreover, the electric-charge trapping effect of monomer as above described helps suppress oxidative deterioration of polymer. This is because, presumably, each of the phenol monomer, the sulfur monomer, and the phosphorus monomer traps radical resulting from oxidative deterioration of polymer, and, in the case of, for example, the phenol monomer in particular, the monomer in itself becomes phenoxy radical having low reactivity, thus suppressing the progress of polymer deterioration. Moreover, each of the sulfur monomer and the phosphorus monomer serves as a peroxide decomposer and is thus capable of suppressing the progress of continuous oxidizing reaction. The suppression of polymer deterioration makes it possible to increase the lifetime of the dielectric film under high temperature load.

Polyarylate is aromatic polyester composed of a polymerized substance of dihydric phenol and aromatic dicarboxylic acid. A polymer having a repeating unit as expressed by the general formula (1) or (2) can be given as an example of polyarylate.

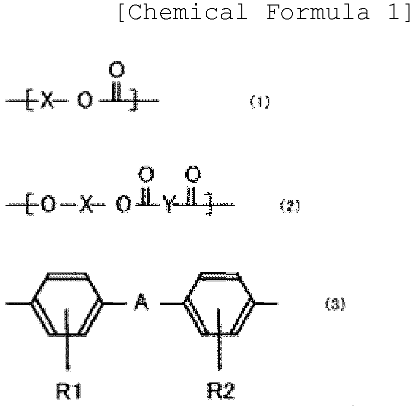

In the general formula (1) or (2), X represents at least one divalent group selected among from a divalent aliphatic group, a divalent cycloaliphatic group, and a divalent group expressed by the general formula (3). In the general formula (2), Y represents substituted or unsubstituted allylene group.

In the general formula (3), R1 and R2 independently represent substituted or unsubstituted alkyl group, aryl group, or halogen atom. A represents single bond or a straight-chain, branched, or cyclic alkylene group with 1 to 12 carbon atoms.

Divalent groups expressed by the general formulae (4a) to (4n) can be given as specific examples of X in the above-described general formulae (1) and (2).

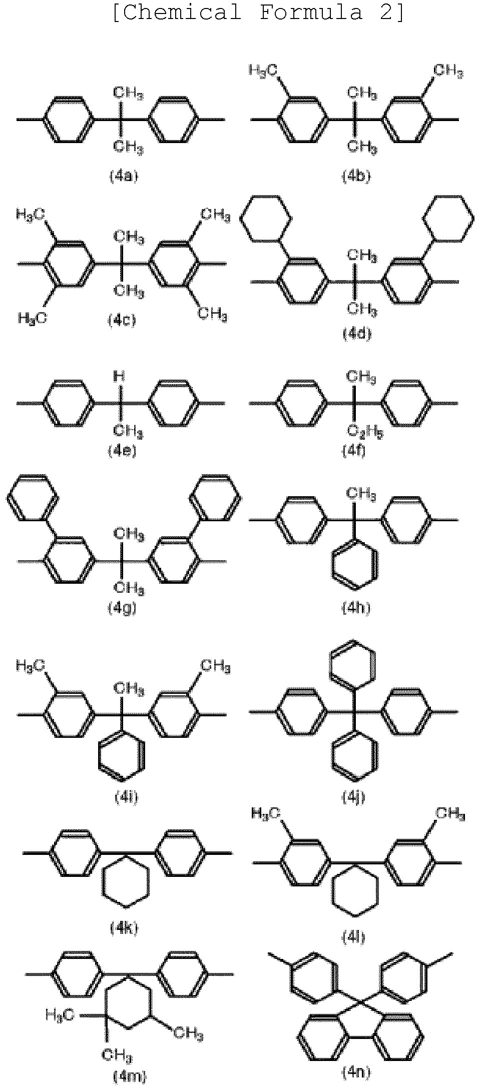

Cycloolefin polymer (COP) is a polymer synthetically formed from cycloolefins serving as a monomer, which has an alicyclic conformation in its molecular structure. Cycloolefin monomer is a compound which has a cyclic conformation formed of carbon atoms, and contains a carbon-carbon double bond present in the cyclic conformation. Specific examples of cycloolefin monomer include monocyclic cycloolefin and norbornene monomer having a norbornene ring as expressed in the general formula (5). In the formula, R1 to R3 represent any given functional group.

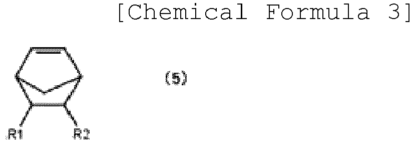

Specific examples of norbornene monomer include: norbornenes; dicyclopentadienes; and tetracyclododecenes. They may contain, as a substituent group, a hydrocarbon group such as an alkyl group, an alkenyl group, an alkylidene group, or an aryl group, or a polar group such as a carboxyl group or an acid anhydride group.

Moreover, norbornene monomer which forms cycloolefin polymer may be of a type which has, in addition to a double bond of a norbornene ring, another double bond. The use of nonpolar norbornene monomer, namely norbornene monomer composed solely of carbon atoms and hydrogen atoms in particular, allows enhancement in mold-releasability with respect to a mold-release film during film formation.

Examples of nonpolar norbornene monomer include: nonpolar dicyclopentadienes; nonpolar tetracyclododecenes; nonpolar norbornenes; and pentacylic or more nonpolar cycloolefins.

Specific examples of nonpolar dicyclopentadienes include: dicyclopentadiene; methyldicyclopentadiene; and dihydrodicyclopentadiene also known as tricyclo [5. 2. 1. 02, 6] deca-8-ene.

Moreover, specific examples of nonpolar tetracyclododecenes include: tetracyclo [6. 2. 1. 13, 6. 02, 7] dodeca-4-ene; 9-methyltetracyclo [6. 2. 1. 13, 6. 02, 7] dodeca-4-ene; 9-ethyltetracyclo [6. 2. 1. 13, 6. 02, 7] dodeca-4-ene; 9-cyclohexyltetracyclo [6. 2. 1. 13, 6. 02, 7] dodeca-4-ene; 9-cyclopentyltetracyclo [6. 2. 1. 13, 6. 02, 7] dodeca-4-ene; 9-methylenetetracyclo [6. 2. 1. 13, 6. 02, 7] dodeca-4-ene; 9-ethylidenetetracyclo [6. 2. 1. 13, 6. 02, 7] dodeca-4-ene; 9-vinyltetracyclo [6. 2. 1. 13, 6. 02, 7] dodeca-4-ene; 9-propenyltetracyclo [6. 2. 1. 13, 6. 02, 7] dodeca-4-ene; 9-cyclohexenyltetracyclo [6. 2. 1. 13, 6. 02, 7] dodeca-4-ene; 9-cyclopentenyltetracyclo [6. 2. 1. 13, 6. 02, 7] dodeca-4-ene; and 9-phenyltetracyclo [6. 2. 1. 13, 6. 02, 7] dodeca-4-ene.

Specific examples of nonpolar norbornenes include: 2-norbornene, being also called simply "norbornene"; 5-methyl-2-norbornene; 5-ethyl-2-norbornene; 5-butyl-2-norbornene; 5-hexyl-2-norbornene; 5-decyl-2-norbornene; 5-cyclohexyl-2-norbornene; 5-cyclopentyl-2-norbornene; 5-ethylidene-2-norbornene; 5-vinyl-2-norbornene; 5-propenyl-2-norbornene; 5-cyclohexenyl-2-norbornene; 5-cyclopentenyl-2-norbornene; 5-phenyl-2-norbornene; tetracyclo [9. 2. 1. 02, 10. 03, 8] tetradeca-3, 5, 7, 12-tetraene (also known as 1, 4-methano-1, 4, 4a, 9a-tetrahydro-9H-fluorene); and tetracyclo [10. 2. 1. 02, 11. 04, 9] pentadeca-4, 6, 8, 13-tetraene (also known as 1, 4-methano-1, 4, 4a, 9, 9a, 10-hexahydroanthracene).

Specific examples of pentacylic or more nonpolar cycloolefins include: pentacyclo [6. 5. 1. 13, 6. 02, 7. 09, 13] pentadeca-4, 10-diene; pentacyclo [9. 2. 1. 14, 7. 02, 10. 03, 8] pentadeca-5, 12-diene; and hexacyclo [6. 6. 1. 13, 6. 110, 13. 02, 7. 09, 14] heptadeca-4-ene.

Such a norbornene monomer as above described forms cycloolefin polymer under the following ring-opening polymerization (refer to formula (6)) or vinyl copolymerization (refer to formula (7)).

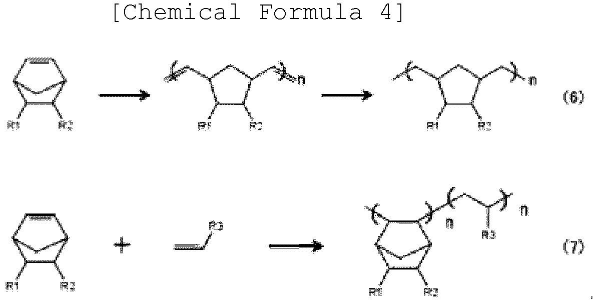

Specific examples of such a cycloolefin polymer include: norbornene ring-opening polymer, being hereafter also called simply "ring-opening polymer", such as ARTON (registered trademark) manufactured by JSR Corporation and ZEONEX (registered trademark) and ZEONOR (registered trademark) manufactured by ZEON Corporation; and norbornene vinyl copolymer, being hereafter also called simply "vinyl copolymer", such as APEL (registered trademark) and APO (registered trademark) manufactured by Mitsui Chemicals, Inc. and TOPAS (registered trademark) manufactured by Polyplastics Co., Ltd, which are commercially available. Among them, ring-opening polymer, or equivalently ring-opening polymer of norbornene ring-containing monomer, in particular, is excellent in film formability and resistance to chemical attack.

The polymer may be formed of either a single polymer which is one of polyarylate and cycloolefin polymer thus far described or two or more different polymers. The polymer may be a copolymer of a plurality of different polymers and/or monomers. The polymer may include another polymer in addition to polyarylate or cycloolefin polymer.

The phenol monomer refers to a monomer having a methyl group or butyl group at the ortho position of phenylene ring. Examples of the phenol monomer include: 2,6-di-tert-butyl-p-cresol; stearyl 3-(3,5-di-tert-butyl-4-hydroxyphenyl) propionate; 3,9-bis {2-[3-(3-tert-butyl-4-hydroxy-5-methylphenyl) propionyloxyJ-1,1-dimethylethyl}-2,4,8,10-tetraoxaspiro [5.5] undecane; and 1,3,5-tris(3,5-di-tert-butyl-4-hydroxyphenylmethyl)-2,4,6-trimethyl benzene.

The sulfur monomer refers to a monomer of propionate ester-bound divalent sulfur atoms. Examples of the sulfur monomer include: 2,2-bis {[3-(dodecylthio)-1-oxopropyloxy] methyl} propane-1,3-diyl bis [3-(dodecylthio) propionate]; didodecyl 3,3'-thiodipropionate; and ditetradecyl 3,3'-thiodipropionate. Such a monomer, having a high molecular weight, is less prone to elution from the dielectric film and is thus highly retentive.

The phosphorus monomer refers to a monomer containing phosphite ester therein. Examples of the phosphorus monomer include: tris (2,4-di-tert-butylphenyl) phosphite; and 3,9-bis (2,6-di-tert-butyl-4-methylphenoxy)- 2,4,8,10-tetraoxa-3,9-diphosphaspiro [5.5] undecane. Among them, tris (2,4-di-tert-butylphenyl) phosphite is impervious to hydrolysis and is thus highly versatile.

In the dielectric film according to the embodiment, with a limited content of the aforementioned monomer, further enhancement in breakdown field strength can be achieved.

For example, when the polymer is polyarylate, given that the content of the polymer (polyarylate) in the dielectric film is 100 parts by mass, by fulfilling the condition where a total monomer content falls in the range of 0.01 to 4.6 parts by mass, it is possible to enhance the breakdown field strength of the dielectric film.

In cases where the content of the phenol monomer falls in a range of 0.1 to 4.0 parts by mass based on 100 parts by mass of polyarylate, the breakdown field strength of the dielectric film can be enhanced. Especially when the monomer is the phenol monomer alone, by fulfilling the condition where the phenol monomer content falls in the range of 0.5 to 4.0 parts by mass, further enhancement in breakdown field strength can be achieved in the dielectric film.

In cases where the content of the sulfur monomer falls in a range of 0.5 to 4.0 parts by mass based on 100 parts by mass of polyarylate, the breakdown field strength of the dielectric film can be enhanced.

In cases where the content of the phosphorus monomer falls in a range of 0.1 to 4.0 parts by mass based on 100 parts by mass of polyarylate, the breakdown field strength of the dielectric film can be enhanced. Especially when the monomer is the phosphorus monomer alone, by fulfilling the condition where the phosphorus monomer content falls in the range of 0.5 to 4.0 parts by mass, further enhancement in breakdown field strength can be achieved in the dielectric film.

The dielectric film may be made to contain two or more of those monomers. In such a case where two or more of the aforementioned monomers are contained as the monomer, by fulfilling the condition where a total monomer content falls in the range of 0.2 to 4.6 parts by mass, or particularly in the range of 1.0 to 4.0 parts by mass, based on 100 parts by mass of polyarylate, it is possible to impart greater breakdown field strength to the dielectric film than in the case where the dielectric film contains any one of the monomers alone.

When the polymer is cycloolefin polymer, given that the content of the polymer (cycloolefin polymer) in the dielectric film is 100 parts by mass, by fulfilling the condition where a total monomer content falls in the range of 0.05 to 7.6 parts by mass, it is possible to enhance the breakdown field strength of the dielectric film.

In cases where the content of the phenol monomer falls in a range of 0.1 to 7.0 parts by mass based on 100 parts by mass of cycloolefin polymer, the breakdown field strength of the dielectric film can be enhanced. Especially when the monomer is the phenol monomer alone, by fulfilling the condition where the phenol monomer content falls in the range of 0.5 to 5.0 parts by mass, further enhancement in breakdown field strength can be achieved in the dielectric film.

In cases where the content of the sulfur monomer falls in a range of 0.1 to 5.0 parts by mass based on 100 parts by mass of cycloolefin polymer, the breakdown field strength of the dielectric film can be enhanced. Especially when the monomer is the sulfur monomer alone, by fulfilling the condition where the sulfur monomer content falls in the range of 0.5 to 5.0 parts by mass, further enhancement in breakdown field strength can be achieved in the dielectric film.

In cases where the content of the phosphorus monomer falls in a range of 0.1 to 7.0 parts by mass based on 100 parts by mass of cycloolefin polymer, the breakdown field strength of the dielectric film can be enhanced. Especially when the monomer is the phosphorus monomer alone, by fulfilling the condition where the phosphorus monomer content falls in the range of 0.5 to 7.0 parts by mass, further enhancement in breakdown field strength can be achieved in the dielectric film.

The dielectric film may be made to contain two or more of those monomers. In such a case where two or more of the aforementioned monomers are contained as the monomer, by fulfilling the condition where a total monomer content falls in the range of 0.2 to 6.0 parts by mass, or particularly in the range of 5.0 to 6.0 parts by mass, based on 100 parts by mass of cycloolefin polymer, it is possible to impart greater breakdown field strength to the dielectric film than in the case where the dielectric film contains any one of the monomers alone.

Identification of polymer and monomer in the dielectric film and polymer-monomer content measurement can be effected by nuclear magnetic resonance (NMR) spectrometry or liquid chromatography mass spectrometry (LC-MS), for example.

The dielectric film may be made to further contain metal alkoxide. When the content of the polymer in the dielectric film is 100 parts by mass, by fulfilling the condition where a metal alkoxide content falls in the range of, for example, 1 to 10 parts by mass, or particularly in the range of 1 to 5 parts by mass, further enhancement in breakdown field strength can be achieved in the dielectric film. That is, in the dielectric film which contains at least one of polyarylate and cycloolefin polymer as the major constituent polymer and also contains at least one of the aforementioned monomers as the monomer, further inclusion of 1 to 10 parts by mass of metal alkoxide based on 100 parts by mass of the major constituent polymer makes it possible to enhance the breakdown field strength of the dielectric film even further.

A compound as expressed by the general formula (8) can be given as an example of metal alkoxide.

BₚM (8)

In the general formula (8), B represents an alkoxy group with 1 to 8 carbons, or preferably 1 to 4 carbons, M represents a metal element such as Si, Ti, Zr, Fe, Cu, Sn, Al, Ge, Ta, or W, and p represents an integer of 2 to 6.

Specific examples of metal alkoxide include: tetraalkoxysilanes such as tetramethoxysilane, tetraethoxysilane, tetraisopropoxysilane, and tetrabutoxysilane; tetraalkoxytitaniums such as tetra-n-propoxytitanium, tetraisopropoxytitanium, and tetrabutoxytitanium; tetraalkoxyzirconiums such as tetran-propoxyzirconium, tetraisopropoxyzirconium, and tetrabutoxyzirconium; and metal alkoxides such as dimethoxycopper, tributoxyaluminum, tetraethoxygermanium, penta-n-propoxytantalum, and hexaethoxytungsten.

A compound as expressed by the general formula (9) can be given as another example of metal alkoxide.

R4ₖBₗM (R5ₘZ)ₙ (9)

In the general formula (9), R4 represents hydrogen or an alkyl group or phenyl group with 1 to 12 carbons, or preferably 1 to 5 carbons, B represents an alkoxy group with 1 to 8 carbons, or preferably 1 to 4 carbons, M represents a metal element such as Si, Ti, Zr, Fe, Cu, Sn, Al, Ge, Ta, or W, R5 represents an alkylene group or alkylidene group with 1 to 4 carbons, or preferably 2 to 4 carbons, Z represents a general functional group such as an isocyanate group, an epoxy group, a carboxyl group, an acid halide group, an acid anhydride group, an amino group, a thiol group, a vinyl group, a methacryl group, or a halogen group, k represents an integer of 0 to 5, l represents an integer of 1 to 5, m represents 0 or 1, and n represents an integer of 0 to 5.

Particularly desirable examples of metal alkoxide include: zirconium (IV) butoxide containing Zr as a metal component (Zr-n-but); Al-containing acetoalkoxy aluminum diisopropylate (Al-M); Si-containing tetraethoxysilane (TEOS); and Ti-containing titanium (IV) butoxide (Ti-n-but) .

In the dielectric film containing metal alkoxide, a plurality of metal-containing fine particles are dispersed in the dielectric film. The metal-containing fine particles range in average particle size from about 0.5 nm to 50 nm, for example. Such metal-containing fine particles dispersed in the dielectric film presumably trap at least part of electric charges suspended in the dielectric film, with consequent suppression of localized electric field.

The content of metal alkoxide in the dielectric film can be determined by nuclear magnetic resonance (NMR) spectrometry, for example. Moreover, the internal microstructure of the metal alkoxide-containing dielectric film, such as the particle size and the condition of dispersion of the metal-containing fine particles, can be checked by observation of the section of the dielectric film under a transmission electron microscope (TEM), for example.

The dielectric film according to the present invention further contains a highly volatile organic component. Note that polyarylate, cycloolefin polymer, and the aforementioned monomers may also be collectively referred to as organic resin.

With the inclusion of a highly volatile organic component in the dielectric film, in the event of local dielectric breakdown in the dielectric film, the organic component contained within the dielectric film is volatilized first under heat evolved in the dielectric breakdown. For example, the inclusion of a highly volatile organic component in the dielectric film constituting a film capacitor makes it possible to increase the rate of scattering of an electrode film.

That is, even when a part with a decreased level of insulation is formed in the dielectric film, it is possible to shorten the time from a normal state where the dielectric film bears an electrode film on its principal face to a state where the electrode film is partly eliminated, and thereby impart high self-restorability to the film capacitor.

The highly volatile organic component contained in the dielectric film includes at least one of cyclohexane, ethylcyclohexane, toluene, xylene, chloroform, and tetrahydrofuran. Such an organic component lends itself to dissolution of polyarylate and cycloolefin polymer. The total content of the highly volatile organic component in the dielectric film falls in the range of 0.01% to 7% by mass. In the case where the dielectric film 1 contains the highly volatile organic component within the range of 0.01% to 7% by mass, the decrease in relative permittivity in the dielectric film can be suppressed within 10%. Hence, even after the occurrence of a self-restoration phenomenon, it is possible to minimize a decrease in capacitance.

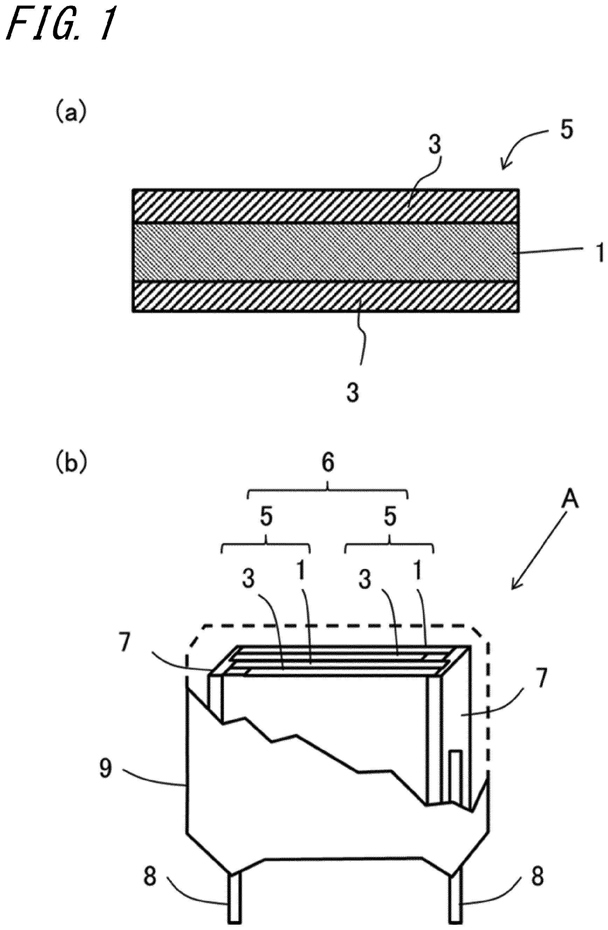

FIG. 1(a) is a sectional view schematically showing a structure of a dielectric film having an electrode film on its surface, and FIG. 1(b) is an external perspective view schematically showing the configuration of a film capacitor according to a first embodiment.

The film capacitor A according to the first embodiment comprises, as basic constituent elements, a main body 6 composed of a stack of a plurality of metalized films 5, and a pair of external electrodes 7 disposed at the main body 6. As shown in FIG. 1(a), the metalized film 5 comprises a dielectric film 1 having an electrode film 3 on its surface. Moreover, a lead wire 8 is disposed in connection with the external electrode 7 on an as needed basis.

The main body 6, the external electrode 7, and part of the lead wire 8 may be covered with an outer casing member 9 from the standpoints of insulation and environmental resistance on an as needed basis. FIG. 1(b) shows the construction with part of the outer casing member 9 removed, and, the cut-away portion of the outer casing member 9 is indicated by dashed lines.

In the film capacitor A according to the first embodiment, the dielectric film 1 contains an organic resin polymer (polyarylate, cycloolefin polymer) as a major constituent, and also contains an organic resin monomer (phenol monomer, sulfur monomer, phosphorus monomer).

In the film capacitor A according to the first embodiment, the dielectric film 1 contains an organic resin polymer (polyarylate, cycloolefin polymer) as a major constituent and also contains an organic resin monomer (phenol monomer, sulfur monomer, phosphorus monomer), wherefore the breakdown field strength of the dielectric film 1 can be enhanced.

The film capacitor A according to the first embodiment comprises such a dielectric film 1 with an electrode film 3 borne on the surface thereof. Although, in FIG. 1(a), there is shown the dielectric film 1 having the electrode film 3 on both principal faces thereof, the film capacitor may comprise a stack of one or more sets of the metalized films each comprising the dielectric film 1 formed on one side with the electrode film 3.

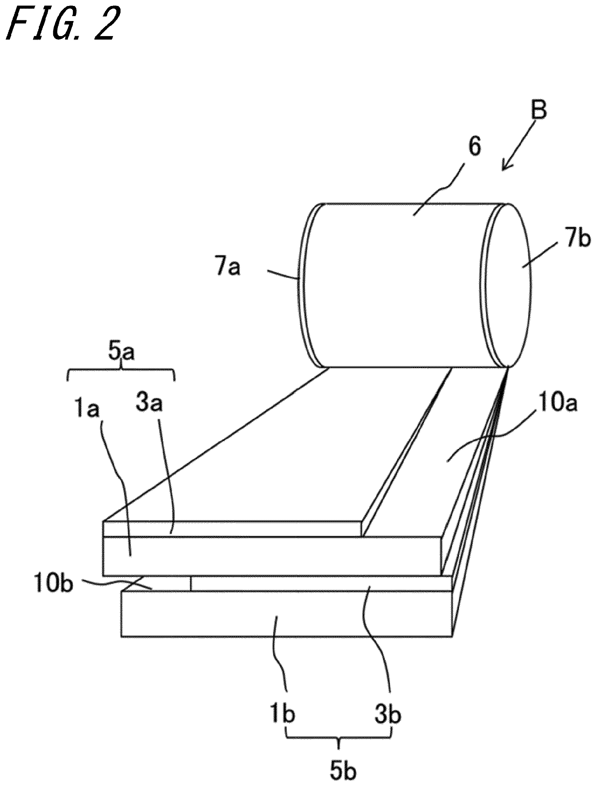

FIG. 2 is a developed perspective view schematically showing the configuration of a film capacitor according to a second embodiment. In the film capacitor B according to the second embodiment, metalized films 5a and 5b are wound to constitute the main body 6, and, as external electrodes 7a and 7b, metallikon electrodes are disposed on the opposed end faces, respectively, of the main body 6.

The metalized film 5a comprises a dielectric film 1a having an electrode film 3a on its principal face, and the metalized film 5b comprises a dielectric film 1b having an electrode film 3b on its principal face. In FIG. 2, the electrode film 3a, 3b is formed on one end side in a width direction of the dielectric film 1a, 1b so as to leave an electrode film 3a, 3b-free exposed area of the dielectric film 1a, 1b, which may be hereafter referred to as "electrode film-free portion 10a, 10b". The electrode film-free portion 10a, 10b is left as a continuous portion extending in a longitudinal direction of the dielectric film 1a, 1b.

The metalized films 5a and 5b are arranged so that the electrode film-free portions 10a and 10b are located on different ends in the width direction of the dielectric films 1a and 1b. Moreover, the metallized films 5a and 5b are stacked on top of one another in a deviated position of the width direction so that their ends different from ends corresponding to the electrode film-free portions 10a and 10b protrude in the width direction.

That is, the metalized film 5a comprising the dielectric film 1a and the electrode film 3a and the metalized film 5b comprising the dielectric film 1b and the electrode film 3b are stacked and wound together as shown in FIG. 2 to constitute the film capacitor B. In FIG. 2, the dielectric film 1a, 1b and the electrode film 3a, 3b are each illustrated as being shaped so that the thickness becomes larger gradually from the rear to the front as viewed in FIG. 2 in the interest of easy understanding of the structure of the film capacitor B, but, the thickness is uniform in reality.

Examples of the material of construction of the electrode film 3 applied to the film capacitors A and B include a metal such as aluminum (Al) or zinc (Zn) and alloys of metals.

Moreover, one metal material selected from among zinc, aluminum, copper, and solder is suitable for use as the material of construction of the metallikon electrodes constituting the external electrodes 7a and 7b.

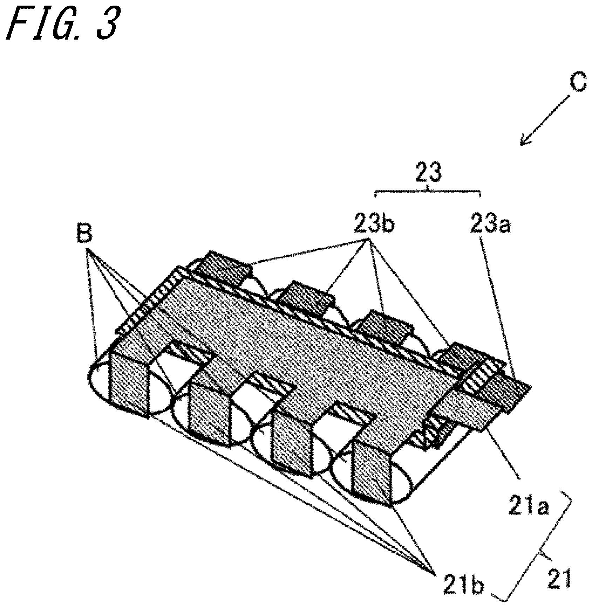

FIG. 3 is a perspective view schematically showing the structure of one embodiment of a combination type capacitor. For ease in understanding the structure, the illustration of a case and a resin for molding is omitted from FIG. 3. The combination type capacitor C according to the embodiment is constructed of a plurality of the film capacitors B connected in parallel with each other via a pair of bus bars 21 and 23. The bus bars 21 and 23 are composed of terminal portions 21a and 23a and extraction terminal portions 21b and 23b, respectively. The terminal portions 21a and 23a are intended for external connection, and, the extraction terminal portions 21b and 23b are connected to the external electrodes 7a and 7b, respectively, of the film capacitor B.

With the application of the dielectric film which contains organic resin polymer (polyarylate, cycloolefin polymer) as a major constituent and also contains organic resin monomer (phenol monomer, sulfur monomer, phosphorus monomer) to a dielectric film for forming the film capacitor B and the combination type capacitor C as is the case for the film capacitor A, the dielectric film can be made higher in breakdown field strength and yet smaller in thickness than a conventional dielectric film made of, for example, polypropylene or polyethylene terephthalate. This makes it possible to achieve both size reduction and increased capacity in the film capacitor B and the combination type capacitor C.

As an alternative to the planar arrangement as shown in FIG. 3, even if the combination type capacitor C is constructed by stacking (arranging) the film capacitors B so that their flat faces in cross section are overlaid with one another, similar effects can be attained.

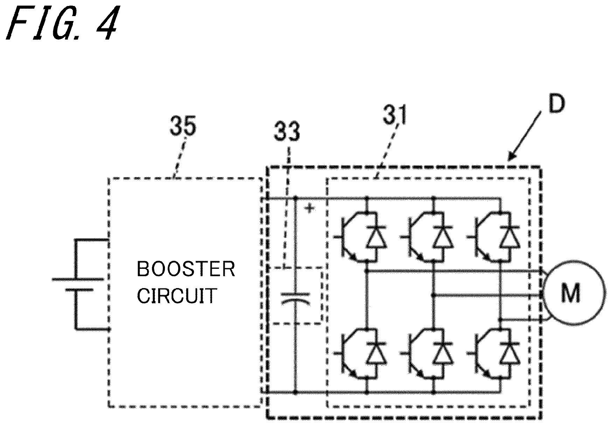

FIG. 4 is a schematic block diagram for explaining the structure of one embodiment of an inverter. In FIG. 4, an inverter D for producing alternating current from direct current resulting from rectification is shown. As shown in FIG. 4, the inverter D according to the embodiment comprises: a bridge circuit 31 composed of switching elements (for example, IGBT (Insulated gate Bipolar Transistor)), and diodes; and a capacitance member 33 placed between the input terminals of the bridge circuit 31 for voltage stabilization. In this construction, the above-described film capacitor B or combination type capacitor C is applied to the capacitance member 33.

The inverter D is connected to a booster circuit 35 for boosting DC power voltage. Meanwhile, the bridge circuit 31 is connected to a motor generator (motor M) which serves as a driving source.

The application of the above-described film capacitor A, B or combination type capacitor C according to the embodiment to the capacitance member 33 of the inverter D helps reduce the proportion of the volume of the capacitance member 33 constituting the inverter D. This makes it possible to obtain the inverter D having the capacitance member 33 which is smaller in size and yet has a greater capacitance.

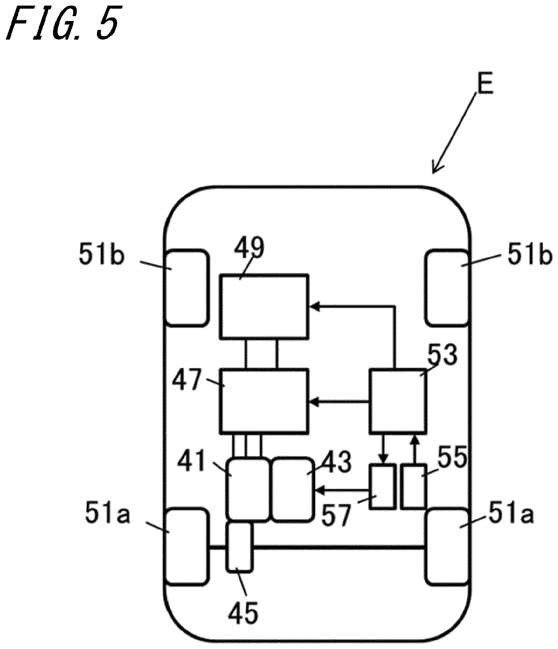

FIG. 5 is a schematic block diagram showing one embodiment of an electric vehicle. An exemplification shown in FIG. 5 is a hybrid electric vehicle (HEV) as the electric vehicle E.

In FIG. 5, reference numeral 41 denotes a driving motor, reference numeral 43 denotes an engine, reference numeral 45 denotes a transmission, reference numeral 47 denotes an inverter, reference numeral 49 denotes a power supply (battery), and reference numerals 51a and 51b denote a front wheel and a rear wheel, respectively.

In the electric vehicle E, an output from at least one of the motor 41 and the engine 43 serving as driving sources is transmitted to a pair of right and left front wheels 51a via the transmission 45. The power supply 49 is connected to the motor 41 via the inverter 47.

Moreover, the electric vehicle E shown in FIG. 5 is provided with a vehicle ECU 53 for performing comprehensive control of the entire electric vehicle E.

When an operator such as a driver operates, for example, an ignition key 55, an accelerator pedal, a brake and the like which are not illustrated, a driving signal corresponding to the operation from the electric vehicle E is inputted to the vehicle ECU 53. On the basis of the driving signal, the vehicle ECU 53 produces output of a command signal to an engine ECU 57, the power supply 49, and the inverter 47 as a load. In response to the instruction signal, The engine ECU 57 controls the revolution speed of the engine 43 to drive the electric vehicle E.

In a case where the inverter D incorporating the film capacitor A, B or the combination type capacitor C according to the embodiment as applied to the capacitance member 33 is mounted in, for example, the electric vehicle E as shown in FIG. 5, since the film capacitor A, B or the combination type capacitor C exhibits high breakdown field strength, the control unit such as ECU installed in the electric vehicle can perform current control with greater stability.

Moreover, as compared with an inverter employing a film capacitor or a combination type capacitor implemented with application of a conventional dielectric film made of, for example, polypropylene or polyethylene terephthalate, the inverter D used in the embodiment has a smaller size and thus allows reduction in vehicle weight. Thus, the embodiment achieves vehicle weight reduction with consequent improvement in fuel economy. It is also possible to reduce the proportion of an automotive control unit in the interior of an engine room. The reduction of the proportion of the control unit makes it possible to install a facility for enhancement of impact resistance in the interior of the engine room, and thereby achieve further improvement in vehicle safety.

The application of the inverter D according to the embodiment is not limited to the aforementioned hybrid electric vehicle (HEV), and hence the inverter D is also applicable to various power converter application products, including an electric vehicle (EV), a powerassisted bicycle, a generator, and a solar battery.

The following describes a manufacturing method with respect to the case for manufacture of the film capacitor B according to the second embodiment. At first, polyarylate and/or cycloolefin polymer are prepared as the organic resin polymer which serves as a major constituent of the dielectric film 1. Moreover, at least one of phenol monomer, sulfur monomer, and phosphorus monomer is prepared as the organic resin monomer. In addition, one substance selected from the group consisting of cyclohexane, ethylcyclohexane, toluene, xylene, and o-dichlorobenzene is prepared as a solvent for dissolution of the polymer.

When forming the dielectric film 1, for example, a PET film is prepared as a base material, and, the aforementioned polymer serving as a major constituent and the aforementioned monomer serving as a minor constituent are dissolved in a predetermined solvent for preparation of a polymer-monomer dissolved solution. The dissolved solution obtained is applied for film formation onto the PET film, with subsequent about 1-hour drying process being made at 40 to 180°C to obtain the dielectric film 1. Note that one film-forming technique selected from among a doctor blade method, a die coater method, and a knife coater method is used for the film formation.

Next, a metal such as Al (aluminum) is vapor-deposited on one of the surfaces of the dielectric film 1 obtained to form the electrode film 3. Two sets of the dielectric films 1 formed with the electrode film 3 are prepared, and, they are wound to constitute the main body 6 of the film capacitor B as shown in FIG. 2.

Next, as the external electrodes 7a and 7b, metallikon electrodes are formed one at each end face of the main body 6 from which is exposed the electrode film 3. For example, metal spraying, sputtering, or plating is a suitable method for the formation of the external electrodes 7a and 7b. Subsequently, the surface of the main body 6 provided with the external electrodes 7a and 7b is covered with a non-illustrated outer casing member, whereupon the film capacitor B according to the embodiment can be obtained.

The combination type capacitor C can be obtained by arranging a plurality of (four in this embodiment) the film capacitors B side by side, and thereafter attaching the bus bars 21 and 23 to the external electrodes 7a and 7b formed on opposed ends of the main body 6 via joining materials.

By placing the film capacitor B, as well as the combination type capacitor C, in a case and thereafter filling air space in the case with a resin, the capacitor can be made as a resin-molded (case-molded) capacitor.

### Examples

Dielectric films were produced in the following manner, with subsequent evaluation having been performed thereon.

### (Example 1)

Polyarylate and the following monomer were prepared as the polymer and the monomer, respectively, of the dielectric film. Also, toluene was prepared as a solvent.

As phenol monomer, 3,9-bis {2-[3-(3-tert-butyl-4-hydroxy-5-methylphenyl) propionyloxy]-1,1-dimethylethyl}-2,4,8,10-tetraoxaspiro [5.5] undecane ("AO-80" manufactured by ADEKA Corporation) was used.

As sulfur monomer, 2,2-bis {[3-(dodecylthio)-1-oxopropyloxy] methyl} propane-1,3-diyl bis [3-(dodecylthio) propionate] ("AO-412S" manufactured by ADEKA Corporation) was used.

As phosphorus monomer, tris (2,4-di-tert-butylphenyl) phosphite ("2112" manufactured by ADEKA Corporation) was used.

Moreover, as metal alkoxide, zirconium (IV) butoxide (hereafter also called "Zr-n-but"), acetoalkoxy aluminum diisopropylate (hereafter also called "Al-M"), tetraethoxysilane (hereafter also called "TEOS"), and titanium (IV) butoxide (hereafter also called "Ti-n-but") were prepared.

Next, predetermined amounts of the polymer, the monomer, and the solvent as above described were mixed for preparation of organic-resin dissolved solutions, each having a total organic resin (polymer and monomer) content of about 15% by mass (Tables 1 and 2). Further preparations were made to obtain additional solutions, each comprising the dissolved solution given above with one of the aforementioned metal alkoxides added (Table 3).

Then, each dissolved solution thus prepared was applied onto a polyethylene terephthalate (PET)-made base material by an applicator, with subsequent drying process having been made with a hot air dryer, for production of a dielectric film. The dielectric film thickness was on the average 5 um thick.

A monomer-free dielectric film was produced as a comparative example, with subsequent evaluation having been performed likewise thereon (Sample No. I-1).

Next, aluminum was vapor-deposited on the surface of the dielectric film obtained to form a metalized film. Then, the metalized film thus formed was wound to constitute a cylindrical film capacitor as shown in FIG. 2. The produced film capacitor was 5 mm in diameter and 100 mm in widthwise length. The vapor-deposited aluminum film thickness was set to be on the average 50 nm thick.

Each produced film capacitor was measured in respect of its monomer content. To determine the content of monomer, a sample obtained by sampling of the dielectric film and a reference solution were put in a flask for preparation of a solution of measurement, whereafter measurement was made thereon by nuclear magnetic resonance (NMR) spectrometry and liquid chromatography mass spectrometry (LC-MS). Note that tetrahydrofuran (THF) was used for a reference solution in the case of effecting quantitative analysis. Each of the added monomers was detected as the monomer contained in the sample, and, its content was found to coincide with the corresponding amount of addition as listed in Tables 1 to 3 within the permissible error range.

Next, each produced film capacitor was measured in respect of its dielectric strength for determination of breakdown field strength (V/um). With use of an insulation resistance tester, the dielectric strength was determined on the basis of the voltage obtained at the instant at which the value of leakage current reached 0.5 A. Moreover, the breakdown field strength was expressed as a ratio with respect to the breakdown field strength of a monomer-free sample defined as 1.

Some samples (Sample Nos. I-1, I-5, I-13, I-21, I-28, and I-43) were tested for their lifetime under high temperature load. In the life test under high temperature load, a metalized film cut from each film capacitor was used as a sample of measurement. The measurement sample was worked for size adjustment so as to obtain a capacitance-forming section having an area of 1.5 by 1.5 mm². In the test, after the produced measurement sample was allowed to stand for 90 minutes in a high-temperature chamber maintained at 110°C, a DC high voltage tester was operated so that an increase in voltage occurs at a voltage raising rate of 100 V/sec until the level of a predetermined electric field was reached. The time between the attainment of the predetermined electric field and the first occurrence of breakdown (short-circuiting) was defined as a lifetime.

**[Table 1]**

| Sample No. | Monomer | | | | Breakdown field strength | |
|---|---|---|---|---|---|---|
| | Total | Phenol monomer (AO-80) | Sulfur monomer (AO-412S) | Phosphorus monomer (2112) | Measured value | Ratio^{*2} |
| | Part by mass^{*1} | Part by mass^{*1} | Part by mass^{*1} | Part by mass^{*1} | V/µm | - |
| I-1** | 0 | 0 | 0 | 0 | 422 | 1 |
| I-2 | 0.01 | 0.01 | 0 | 0 | 424 | 1.004 |
| I-3 | 0.10 | 0.10 | 0 | 0 | 450 | 1.066 |
| I-4 | 0.50 | 0.50 | 0 | 0 | 531 | 1.258 |
| I-5 | 1.00 | 1.00 | 0 | 0 | 522 | 1.237 |
| I-6 | 2.00 | 2.00 | 0 | 0 | 490 | 1.161 |
| I-7 | 3.00 | 3.00 | 0 | 0 | 503 | 1.192 |
| I-8 | 4.00 | 4.00 | 0 | 0 | 450 | 1.066 |
| I-9 | 5.00 | 5.00 | 0 | 0 | 410 | 0.971 |
| I-10 | 0.01 | 0 | 0.01 | 0 | 425 | 1.007 |
| I-11 | 0.10 | 0 | 0.10 | 0 | 440 | 1.042 |
| I-12 | 0.50 | 0 | 0.50 | 0 | 520 | 1.232 |
| I-13 | 1.00 | 0 | 1.00 | 0 | 514 | 1.218 |
| I-14 | 2.00 | 0 | 2.00 | 0 | 505 | 1.196 |
| I-15 | 3.00 | 0 | 3.00 | 0 | 480 | 1.137 |
| I-16 | 4.00 | 0 | 4.00 | 0 | 454 | 1.076 |
| I-17 | 5.00 | 0 | 5.00 | 0 | 412 | 0.976 |
| I-18 | 0.01 | 0 | 0 | 0.01 | 423 | 1.002 |
| I-19 | 0.10 | 0 | 0 | 0.10 | 470 | 1.113 |
| I-20 | 0.50 | 0 | 0 | 0.50 | 500 | 1.185 |
| I-21 | 1.00 | 0 | 0 | 1.00 | 514 | 1.218 |
| I-22 | 2.00 | 0 | 0 | 2.00 | 490 | 1.161 |
| I-23 | 3.00 | 0 | 0 | 3.00 | 480 | 1.137 |
| I-24 | 4.00 | 0 | 0 | 4.00 | 460 | 1.090 |
| I-25 | 5.00 | 0 | 0 | 5.00 | 410 | 0.971 |
| I-26 | 0.02 | 0.01 | 0.01 | 0 | 425 | 1.007 |
| I-27 | 0.20 | 0.10 | 0.10 | 0 | 432 | 1.023 |
| I-28 | 1.00 | 0.50 | 0.50 | 0 | 582 | 1.379 |
| I-29 | 2.00 | 1.00 | 1.00 | 0 | 532 | 1.260 |
| I-30 | 4.00 | 2.00 | 2.00 | 0 | 455 | 1.078 |
| I-31 | 5.00 | 2.50 | 2.50 | 0 | 410 | 0.971 |
| I-32 | 0.11 | 0.01 | 0.10 | 0 | 446 | 1.057 |
| I-33 | 4.01 | 0.01 | 4.00 | 0 | 440 | 1.042 |
| I-34 | 5.01 | 0.01 | 5.00 | 0 | 407 | 0.964 |
| I-35 | 0.11 | 0.10 | 0.01 | 0 | 460 | 1.090 |
| I-36 | 4.10 | 0.10 | 4.00 | 0 | 480 | 1.137 |
| I-37 | 5.10 | 0.10 | 5.00 | 0 | 408 | 0.967 |
| I-38 | 0.11 | 0.10 | 0.01 | 0 | 485 | 1.149 |
| I-39 | 4.01 | 4.00 | 0.01 | 0 | 440 | 1.042 |
| I-40 | 5.01 | 5.00 | 0.01 | 0 | 412 | 0.976 |
| I-41 | 0.02 | 0.01 | 0 | 0.01 | 424 | 1.004 |
| I-42 | 0.20 | 0.10 | 0 | 0.10 | 440 | 1.042 |
| I-43 | 1.00 | 0.50 | 0 | 0.50 | 588 | 1.393 |
| I-44 | 2.00 | 1.00 | 0 | 1.00 | 503 | 1.192 |
| I-45 | 4.00 | 2.00 | 0 | 2.00 | 453 | 1.073 |
| I-46 | 5.00 | 2.50 | 0 | 2.50 | 408 | 0.967 |
| I-47 | 0.11 | 0.01 | 0 | 0.10 | 439 | 1.040 |
| I-48 | 4.01 | 0.01 | 0 | 4.00 | 459 | 1.087 |
| I-49 | 5.01 | 0.01 | 0 | 5.00 | 418 | 0.990 |
| I-50 | 0.11 | 0.10 | 0 | 0.01 | 470 | 1.113 |
| I-51 | 4.10 | 0.10 | 0 | 4.00 | 462 | 1.095 |
| I-52 | 5.10 | 0.10 | 0 | 5.00 | 404 | 0.957 |
| I-53 | 0.11 | 0.10 | 0 | 0.01 | 445 | 1.054 |
| I-54 | 4.01 | 4.00 | 0 | 0.01 | 460 | 1.090 |
| I-55 | 5.01 | 5.00 | 0 | 0.01 | 402 | 0.952 |

| | | | | | | |
|---|---|---|---|---|---|---|
| *1: Value based on 100 parts by mass of polyarylate *2: Ratio with respect to breakdown field strength of monomer-free sample No. I-1 defined as 1 **: Comparative Example | | | | | | |

**Table 2**

| Sample No. | Monomer | | | | Breakdown field strength | |
|---|---|---|---|---|---|---|
| | Total | Phenol monomer (AO-80) | Sulfur monomer (AO-412S) | Phosphorus monomer (2112) | Measured value | Ratio^{*2} |
| | Part by mass^{*1} | Part by mass^{*1} | Part by mass^{*1} | Part by mass^{*1} | V/µm | - |
| I-56 | 0.02 | 0 | 0.01 | 0.01 | 440 | 1.042 |
| I-57 | 0.20 | 0 | 0.10 | 0.10 | 460 | 1.090 |
| I-58 | 1.00 | 0 | 0.50 | 0.50 | 542 | 1.284 |
| I-59 | 2.00 | 0 | 1.00 | 1.00 | 512 | 1.213 |
| I-60 | 4.00 | 0 | 2.00 | 2.00 | 445 | 1.054 |
| I-61 | 0.11 | 0 | 0.01 | 0.10 | 444 | 1.052 |
| I-62 | 4.01 | 0 | 0.01 | 4.00 | 440 | 1.042 |
| I-63 | 5.01 | 0 | 0.01 | 5.00 | 419 | 0.993 |
| I-64 | 0.11 | 0 | 0.10 | 0.01 | 455 | 1.078 |
| I-65 | 4.10 | 0 | 0.10 | 4.00 | 478 | 1.132 |
| I-66 | 5.10 | 0 | 0.10 | 5.00 | 410 | 0.971 |
| I-67 | 4.01 | 0 | 4.00 | 0.01 | 442 | 1.047 |
| I-68 | 4.50 | 0 | 4.00 | 0.50 | 440 | 1.042 |
| I-69 | 5.01 | 0 | 5.00 | 0.01 | 411 | 0.974 |
| I-70 | 0.03 | 0.01 | 0.01 | 0.01 | 440 | 1.042 |
| I-71 | 0.12 | 0.01 | 0.01 | 0.10 | 460 | 1.090 |
| I-72 | 0.52 | 0.01 | 0.01 | 0.50 | 500 | 1.185 |
| I-73 | 4.02 | 0.01 | 0.01 | 4.00 | 455 | 1.078 |
| I-74 | 0.21 | 0.10 | 0.10 | 0.01 | 440 | 1.042 |
| I-75 | 0.30 | 0.10 | 0.10 | 0.10 | 450 | 1.066 |
| I-76 | 0.70 | 0.10 | 0.10 | 0.50 | 490 | 1.161 |
| I-77 | 4.20 | 0.10 | 0.10 | 4.00 | 465 | 1.102 |
| I-78 | 1.01 | 0.50 | 0.50 | 0.01 | 560 | 1.327 |
| I-79 | 1.10 | 0.50 | 0.50 | 0.10 | 568 | 1.346 |
| I-80 | 1.50 | 0.50 | 0.50 | 0.50 | 572 | 1.355 |
| I-81 | 4.00 | 0.50 | 0.50 | 3.00 | 500 | 1.185 |
| I-82 | 2.01 | 1.00 | 1.00 | 0.01 | 542 | 1.284 |
| I-83 | 2.10 | 1.00 | 1.00 | 0.10 | 550 | 1.303 |
| I-84 | 2.50 | 1.00 | 1.00 | 0.50 | 560 | 1.327 |
| I-85 | 4.00 | 1.00 | 1.00 | 2.00 | 515 | 1.220 |
| I-86 | 4.01 | 2.00 | 2.00 | 0.01 | 445 | 1.054 |
| I-87 | 4.10 | 2.00 | 2.00 | 0.10 | 455 | 1.078 |
| I-88 | 4.50 | 2.00 | 2.00 | 0.50 | 460 | 1.090 |
| I-89 | 0.12 | 0.01 | 0.10 | 0.01 | 444 | 1.052 |
| I-90 | 0.21 | 0.01 | 0.10 | 0.10 | 470 | 1.113 |
| I-91 | 0.61 | 0.01 | 0.10 | 0.50 | 490 | 1.161 |
| I-92 | 4.11 | 0.01 | 0.10 | 4.00 | 486 | 1.151 |
| I-93 | 4.11 | 0.01 | 4.00 | 0.10 | 440 | 1.042 |
| I-94 | 4.51 | 0.01 | 4.00 | 0.50 | 459 | 1.087 |
| I-95 | 0.12 | 0.10 | 0.01 | 0.01 | 470 | 1.113 |
| I-96 | 0.21 | 0.10 | 0.01 | 0.10 | 490 | 1.161 |
| I-97 | 0.61 | 0.10 | 0.01 | 0.50 | 500 | 1.185 |
| I-98 | 4.11 | 0.10 | 0.01 | 4.00 | 480 | 1.137 |
| I-99 | 4.11 | 0.10 | 4.00 | 0.01 | 478 | 1.132 |
| I-100 | 4.20 | 0.10 | 4.00 | 0.10 | 479 | 1.135 |
| I-101 | 4.50 | 0.10 | 4.00 | 0.40 | 450 | 1.066 |
| I-102 | 4.02 | 4.00 | 0.01 | 0.01 | 472 | 1.118 |
| I-103 | 4.20 | 4.00 | 0.10 | 0.10 | 468 | 1.109 |

| | | | | | | |
|---|---|---|---|---|---|---|
| *1: Value based on 100 parts by mass of polyarylate *2: Ratio with respect to breakdown field strength of monomer-free sample No. I-1 defined as 1 | | | | | | |

**Table 3**

| Sample No. | Monomer | | | | Metal alkoxide | | Breakdown field strength | |
|---|---|---|---|---|---|---|---|---|
| | Total | Phenol monomer (AO-80) | Sulfur monomer (AO-412S) | Phosphorus monomer (2112) | | | Measured value | Ratio^{*2} |
| | Part by mass^{*1} | Part by mass^{*1} | Part by mass^{*1} | Part by mass^{*1} | Type | Part by mass^{*1} | V/µm | - |
| II-1** | 0 | 0 | 0 | 0 | Zirconium (IV) butoxide (Zr-n-but) | 1.0 | 470 | 1.113 |
| II-2** | 0 | 0 | 0 | 0 | | 3.0 | 480 | 1.137 |
| II-3** | 0 | 0 | 0 | 0 | | 5.0 | 480 | 1.137 |
| II-4** | 0 | 0 | 0 | 0 | | 10.0 | 430 | 1.019 |
| II-5 | 0.50 | 0.50 | 0 | 0 | | 1.0 | 540 | 1.279 |
| II-6 | 0.50 | 0.50 | 0 | 0 | | 3.0 | 556 | 1.317 |
| II-7 | 0.50 | 0.50 | 0 | 0 | | 5.0 | 554 | 1.312 |
| II-8 | 0.50 | 0.50 | 0 | 0 | | 10.0 | 550 | 1.303 |
| II-9 | 3.00 | 3.00 | 0 | 0 | | 1.0 | 560 | 1.327 |
| II-10 | 3.00 | 3.00 | 0 | 0 | | 3.0 | 571 | 1.353 |
| II-11 | 3.00 | 3.00 | 0 | 0 | | 5.0 | 563 | 1.334 |
| II-12 | 3.00 | 3.00 | 0 | 0 | | 10.0 | 518 | 1.227 |
| II-13 | 0.50 | 0 | 0.50 | 0 | | 1.0 | 540 | 1.279 |
| II-14 | 0.50 | 0 | 0.50 | 0 | | 3.0 | 550 | 1.303 |
| II-15 | 0.50 | 0 | 0.50 | 0 | | 5.0 | 548 | 1.298 |
| II-16 | 0.50 | 0 | 0.50 | 0 | | 10.0 | 535 | 1.267 |
| II-17 | 3.00 | 0 | 3.00 | 0 | | 1.0 | 520 | 1.232 |
| II-18 | 3.00 | 0 | 3.00 | 0 | | 3.0 | 540 | 1.279 |
| II-19 | 3.00 | 0 | 3.00 | 0 | | 5.0 | 542 | 1.284 |
| II-20 | 3.00 | 0 | 3.00 | 0 | | 10.0 | 519 | 1.230 |
| II-21 | 0.50 | 0 | 0 | 0.50 | | 1.0 | 540 | 1.279 |
| II-22 | 0.50 | 0 | 0 | 0.50 | | 3.0 | 560 | 1.327 |
| II-23 | 0.50 | 0 | 0 | 0.50 | | 5.0 | 555 | 1.315 |
| II-24 | 0.50 | 0 | 0 | 0.50 | | 10.0 | 520 | 1.232 |
| II-25 | 3.00 | 0 | 0 | 3.00 | | 1.0 | 540 | 1.279 |
| II-26 | 3.00 | 0 | 0 | 3.00 | | 3.0 | 550 | 1.303 |
| II-27 | 3.00 | 0 | 0 | 3.00 | | 5.0 | 545 | 1.291 |
| II-28 | 3.00 | 0 | 0 | 3.00 | | 10.0 | 520 | 1.232 |
| II-29 | 1.00 | 0.50 | 0.50 | 0 | | 1.0 | 590 | 1.398 |
| II-30 | 1.00 | 0.50 | 0.50 | 0 | | 3.0 | 594 | 1.407 |
| II-31 | 1.00 | 0.50 | 0.50 | 0 | | 5.0 | 592 | 1.402 |
| II-32 | 1.00 | 0.50 | 0.50 | 0 | | 10.0 | 588 | 1.393 |
| II-33 | 1.00 | 0.50 | 0 | 0.50 | | 1.0 | 593 | 1.405 |
| II-34 | 1.00 | 0.50 | 0 | 0.50 | | 3.0 | 596 | 1.412 |
| II-35 | 1.00 | 0.50 | 0 | 0.50 | | 5.0 | 592 | 1.402 |
| II-36 | 1.00 | 0.50 | 0 | 0.50 | | 10.0 | 590 | 1.398 |
| II-37 | 1.00 | 0 | 0.50 | 0.50 | | 1.0 | 550 | 1.303 |
| II-38 | 1.00 | 0 | 0.50 | 0.50 | | 3.0 | 560 | 1.327 |
| II-39 | 1.00 | 0 | 0.50 | 0.50 | | 5.0 | 555 | 1.315 |
| II-40 | 1.00 | 0 | 0.50 | 0.50 | | 10.0 | 553 | 1.310 |
| II-41 | 1.50 | 0.50 | 0.50 | 0.50 | | 1.0 | 594 | 1.407 |
| II-42 | 1.50 | 0.50 | 0.50 | 0.50 | | 3.0 | 595 | 1.410 |
| II-43 | 1.50 | 0.50 | 0.50 | 0.50 | | 5.0 | 592 | 1.402 |
| II-44 | 1.50 | 0.50 | 0.50 | 0.50 | | 10.0 | 591 | 1.400 |
| II-45 | 0.50 | 0 | 0 | 0.50 | Acetoalkoxy aluminum diisopropylate (Al-M) | 1.0 | 505 | 1.196 |
| II-46 | 0.50 | 0 | 0 | 0.50 | | 3.0 | 515 | 1.220 |
| II-47 | 0.50 | 0 | 0 | 0.50 | | 5.0 | 524 | 1.241 |
| II-48 | 0.50 | 0 | 0 | 0.50 | Tetraethoxysilane (TEOS) | 1.0 | 501 | 1.173 |
| II-49 | 0.50 | 0 | 0 | 0.50 | | 3.0 | 505 | 1.196 |
| II-50 | 0.50 | 0 | 0 | 0.50 | | 5.0 | 515 | 1.220 |
| II-51 | 0.50 | 0 | 0 | 0.50 | Titanium (IV) butoxide (Ti-n-but) | 1.0 | 502 | 1.185 |
| II-52 | 0.50 | 0 | 0 | 0.50 | | 3.0 | 510 | 1.208 |
| II-53 | 0.50 | 0 | 0 | 0.50 | | 5.0 | 518 | 1.227 |

| | | | | | | | | |
|---|---|---|---|---|---|---|---|---|
| *1: Value based on 100 parts by mass of polyarylate *2: Ratio with respect to breakdown field strength of monomer-free sample No. I-1 defined as 1 **: Comparative Example | | | | | | | | |

As seen in Tables 1 and 2, the sample employing the dielectric film containing polyarylate as polymer and a predetermined amount of at least one of phenol monomer, sulfur monomer, and phosphorus monomer as monomer (Sample Nos. I-2 through I-8, I-10 through I-16, I-18 through I-24, I-26 through 1-30, 1-32, 1-33, 1-35, I-36, I-38, I-39, I-41 through I-45, I-47, I-48, I-50, I-51, I-53, I-54, I-56 through I-62, I-64, I-65, I-67, I-68, and I-70 through I-103) was higher in breakdown field strength than the monomer-free sample No. I-1.

In the sample having a phenol monomer content of 0.1 to 4 parts by mass (Sample Nos. I-3 through I-8), the sample having a sulfur monomer content of 0.5 to 4.0 parts by mass (Sample Nos. I-12 through I-16), or the sample having a phosphorus monomer content of 0.1 to 4 parts by mass (Sample Nos. I-19 through I-24) in particular, given that the breakdown field strength of the monomer-free sample (Sample No. I-1) was 1, the breakdown field strength ratio of each of the samples given above was 1.066 or more times as great.

Moreover, the sample containing two or more different monomers exhibited even higher breakdown field strength. In the sample which contained two or more different monomers and had a total monomer content of 1.0 to 3.0 parts by mass (Sample Nos. I-28, I-29, I-43, I-44, I-58, I-59, I-78 through I-80, and I-82 through I-84) in particular, given that the breakdown field strength of the monomer-free sample (Sample No. I-1) was 1, the breakdown field strength ratio of each of the samples given above was 1.192 or more times as great.

Some samples were compared in respect of their lifetime under high temperature load. The result showed that the lifetime of the monomer-free sample (Sample No. I-1) under high temperature load was 0.05 hours, whereas the lifetime of each of the monomer-containing samples under high temperature load was greater than or equal to 0.07 hours, and more specifically, those of Sample Nos. I-5, I-13, I-21, I-28, and I-43 under high temperature load were 0.1 hour, 0.08 hours, 0.07 hours, 0.4 hours, and 0.5 hours, respectively, which meant that the monomer-containing samples afforded excellent life characteristics.

Moreover, as seen in Table 3, each of the samples further containing metal alkoxide present in the dielectric film was higher in breakdown field strength than the corresponding sample which had the same monomer content but contained no metal alkoxide (Sample Nos. I-1, I-4, I-7, I-12, I-15, I-20, I-23, I-28, I-43, I-58, and I-80 in Tables 1 and 2).

Moreover, the sample which had a phosphorus monomer content of 0.5 parts by mass based on 100 parts by mass of polyarylate and further had an acetoalkoxy aluminum diisopropylate (Al-M) content of 1.0 to 5.0 parts by mass (Sample Nos. II-45 through II-47) and the sample which had the same phosphorus monomer content as above and further contained one of tetraethoxysilane (TEOS) and titanium (IV) butoxide (Ti-n-but) in an amount of 3.0 to 5.0 parts by mass (Sample Nos. II-49, II-50, II-52, and II-53) were each higher in breakdown field strength than the sample which had a phosphorus monomer content of 0.5 parts by mass but contained no metal alkoxide (Sample No. I-20).

### (Example 2)

Polycycloolefin and the following monomer were prepared as the polymer and the monomer, respectively, of the dielectric film. Also, ethylcyclohexane was prepared as a solvent.

As phenol monomer, stearyl 3-(3,5-di-tert-butyl-4-hydroxyphenyl) propionate ("AO-50" manufactured by ADEKA Corporation) was used.

As sulfur monomer, 2,2-bis {[3-(dodecylthio)-1-oxopropyloxy] methyl} propane-1,3-diyl bis [3-(dodecylthio) propionate] ("AO-412S" manufactured by ADEKA Corporation), and didodecyl 3,3'-thiodipropionate ("DLTP" manufactured by Mitsubishi Chemical Corporation) were used.

As phosphorus monomer, tris (2,4-di-tert-butylphenyl) phosphite ("2112" manufactured by ADEKA Corporation) was used.

Moreover, as metal alkoxide, zirconium (IV) butoxide (hereafter also called "Zr-n-but"), acetoalkoxy aluminum diisopropylate (hereafter also called "Al-M"), tetraethoxysilane (hereafter also called "TEOS"), and titanium (IV) butoxide (hereafter also called "Ti-n-but") were prepared.

Next, predetermined amounts of the polymer, the monomer, and the solvent as above described were mixed for preparation of organic-resin dissolved solutions, each having a total organic resin (polymer and monomer) content of about 15% by mass (Tables 4 and 5). Further preparations were made to obtain additional solutions, each comprising the dissolved solution given above with one of the aforementioned metal alkoxides added (Table 6).

Then, each dissolved solution thus prepared was applied onto a polyethylene terephthalate (PET)-made base material by an applicator, with subsequent drying process having been made with a hot air dryer, for production of a dielectric film. The dielectric film thickness was on the average 5 um thick.

A monomer-free dielectric film was produced as a comparative example, with subsequent evaluation having been performed likewise thereon (Sample No. 111-1).

Aluminum was vapor-deposited on the surface of the dielectric film obtained to form a metalized film. Then, the metalized film thus formed was wound to constitute a cylindrical film capacitor as shown in FIG. 2. The produced film capacitor was 5 mm in diameter and 100 mm in widthwise length. The vapor-deposited aluminum film thickness was set to be on the average 50 nm thick.

Each produced film capacitor was measured in respect of its monomer content. To determine the content of monomer, a sample obtained by sampling of the dielectric film and a reference solution were put in a flask for preparation of a solution of measurement, whereafter measurement was made thereon by nuclear magnetic resonance (NMR) spectrometry and liquid chromatography mass spectrometry (LC-MS). Note that deuterated toluene was used for a reference solution in the case of effecting quantitative analysis. Each of the added monomers was detected as the monomer contained in the sample, and, its content was found to coincide with the corresponding amount of addition as listed in Tables 4 to 6 within the permissible error range.

Next, each produced film capacitor was measured in respect of its dielectric strength for determination of breakdown field strength (V/um). With use of an insulation resistance tester, the dielectric strength was determined on the basis of the voltage obtained at the instant at which the value of leakage current reached 0.5 A. Moreover, the breakdown field strength was expressed as a ratio with respect to the breakdown field strength of a monomer-free sample defined as 1.

**Table 4**

| Sample No. | Monomer | | | | | Breakdown field strength | |
|---|---|---|---|---|---|---|---|
| | Total | Phenol monomer (AO-50) | Sulfur monomer (DLTP) | Sulfur monomer (AO-412S) | Phosphorus monomer (2112) | Measured value | Ratio^{*2} |
| | Part by mass*¹ | Part by mass*¹ | Part by mass*¹ | Part by mass*¹ | Part by mass*¹ | V/µm | - |
| III-1** | 0 | 0 | 0 | 0 | 0 | 750 | 1 |
| III-2 | 0.05 | 0.05 | 0 | 0 | 0 | 752 | 1.003 |
| III-3 | 0.10 | 0.10 | 0 | 0 | 0 | 759 | 1.012 |
| III-4 | 0.50 | 0.50 | 0 | 0 | 0 | 775 | 1.033 |
| III-5 | 5.00 | 5.00 | 0 | 0 | 0 | 820 | 1.093 |
| III-6 | 7.00 | 7.00 | 0 | 0 | 0 | 760 | 1.013 |
| III-7 | 0.05 | 0 | 0.05 | 0 | 0 | 761 | 1.015 |
| III-8 | 0.10 | 0 | 0.10 | 0 | 0 | 770 | 1.027 |
| III-9 | 0.50 | 0 | 0.50 | 0 | 0 | 790 | 1.053 |
| III-10 | 5.00 | 0 | 5.00 | 0 | 0 | 874 | 1.165 |
| III-11 | 7.00 | 0 | 7.00 | 0 | 0 | 856 | 1.141 |
| III-12 | 10.0 | 0 | 10.0 | 0 | 0 | 734 | 0.979 |
| III-13 | 0.05 | 0 | 0 | 0.05 | 0 | 755 | 1.007 |
| III-14 | 0.10 | 0 | 0 | 0.10 | 0 | 775 | 1.033 |
| III-15 | 0.50 | 0 | 0 | 0.50 | 0 | 788 | 1.051 |
| III-16 | 5.00 | 0 | 0 | 5.00 | 0 | 814 | 1.085 |
| III-17 | 7.00 | 0 | 0 | 7.00 | 0 | 766 | 1.021 |
| III-18** | 10.0 | 0 | 0 | 10.0 | 0 | Unmeasurable due to peeling | - |
| III-19 | 0.05 | 0 | 0 | 0 | 0.05 | 755 | 1.007 |
| III-20 | 0.10 | 0 | 0 | 0 | 0.10 | 768 | 1.024 |
| III-21 | 0.50 | 0 | 0 | 0 | 0.50 | 790 | 1.053 |
| III-22 | 5.00 | 0 | 0 | 0 | 5.00 | 830 | 1.107 |
| III-23 | 7.00 | 0 | 0 | 0 | 7.00 | 815 | 1.087 |
| III-24** | 10.0 | 0 | 0 | 0 | 10.0 | Unmeasurable due to peeling | - |
| III-25 | 0.20 | 0.10 | 0 | 0.10 | 0 | 777 | 1.036 |
| III-27 | 0.60 | 0.10 | 0 | 0.50 | 0 | 793 | 1.057 |
| III-26 | 5.10 | 0.10 | 0 | 5.00 | 0 | 820 | 1.093 |
| III-28 | 7.10 | 0.10 | 0 | 7.00 | 0 | 760 | 1.013 |
| III-29 | 0.60 | 0.50 | 0 | 0.10 | 0 | 788 | 1.051 |
| III-30 | 1.00 | 0.50 | 0 | 0.50 | 0 | 801 | 1.068 |
| III-31 | 5.50 | 0.50 | 0 | 5.00 | 0 | 835 | 1.113 |
| III-32 | 7.50 | 0.50 | 0 | 7.00 | 0 | 760 | 1.013 |
| III-33 | 6.00 | 3.00 | 0 | 3.00 | 0 | 820 | 1.093 |
| III-34 | 5.50 | 5.00 | 0 | 0.50 | 0 | 830 | 1.107 |
| III-35 | 7.50 | 7.00 | 0 | 0.50 | 0 | 755 | 1.007 |
| III-36 | 0.20 | 0 | 0.10 | 0 | 0.10 | 770 | 1.027 |
| III-37 | 0.60 | 0 | 0.10 | 0 | 0.50 | 787 | 1.049 |
| III-38 | 5.10 | 0 | 0.10 | 0 | 5.00 | 810 | 1.080 |
| III-39 | 7.10 | 0 | 0.10 | 0 | 7.00 | 759 | 1.012 |
| III-40 | 0.60 | 0 | 0.50 | 0 | 0.10 | 785 | 1.047 |
| III-41 | 1.00 | 0 | 0.50 | 0 | 0.50 | 799 | 1.065 |
| III-42 | 5.50 | 0 | 0.50 | 0 | 5.00 | 825 | 1.100 |
| III-43 | 7.50 | 0 | 0.50 | 0 | 7.00 | 758 | 1.011 |
| III-44 | 6.00 | 0 | 3.00 | 0 | 3.00 | 816 | 1.088 |
| III-45 | 5.50 | 0 | 5.00 | 0 | 0.50 | 826 | 1.101 |
| III-46 | 7.50 | 0 | 7.00 | 0 | 0.50 | 755 | 1.007 |
| III-47 | 0.20 | 0 | 0 | 0.10 | 0.10 | 779 | 1.039 |
| III-48 | 0.60 | 0 | 0 | 0.10 | 0.50 | 791 | 1.055 |
| III-49 | 5.10 | 0 | 0 | 0.10 | 5.00 | 815 | 1.087 |
| III-50 | 7.10 | 0 | 0 | 0.10 | 7.00 | 764 | 1.019 |
| III-51 | 0.60 | 0 | 0 | 0.50 | 0.10 | 793 | 1.057 |
| III-52 | 1.00 | 0 | 0 | 0.50 | 0.50 | 800 | 1.067 |
| III-53 | 5.50 | 0 | 0 | 0.50 | 5.00 | 832 | 1.109 |
| III-54 | 7.50 | 0 | 0 | 0.50 | 7.00 | 760 | 1.013 |
| III-55 | 6.00 | 0 | 0 | 3.00 | 3.00 | 821 | 1.095 |

| | | | | | | | |
|---|---|---|---|---|---|---|---|
| *1: Value based on 100 parts by mass of cycloolefin polymer *2: Ratio with respect to breakdown field strength of monomer-free sample No. III-1 defined as 1 **: Comparative Example | | | | | | | |

**Table 5**

| Sample No. | Monomer | | | | | Breakdown field strength | |
|---|---|---|---|---|---|---|---|
| | Total | Phenol monomer (AO-50) | Sulfur monomer (DLTP) | Sulfur monomer (AO-412S) | Phosphorus monomer (2112) | Measured value | Ratio*² |
| | Part by mass*¹ | Part by mass*¹ | Part by mass*¹ | Part by mass*¹ | Part by mass*¹ | V/µm | - |
| III-56 | 5.50 | 0 | 0 | 5.00 | 0.50 | 830 | 1.107 |
| III-57 | 7.50 | 0 | 0 | 7.00 | 0.50 | 756 | 1.008 |
| III-58 | 0.30 | 0.10 | 0 | 0.10 | 0.10 | 781 | 1.041 |
| III-59 | 5.20 | 0.10 | 0 | 0.10 | 5.00 | 830 | 1.107 |
| III-60 | 0.70 | 0.10 | 0 | 0.10 | 0.50 | 800 | 1.067 |
| III-61 | 7.20 | 0.10 | 0 | 0.10 | 7.00 | 760 | 1.013 |
| III-62 | 5.20 | 0.10 | 0 | 5.00 | 0.10 | 825 | 1.100 |
| III-63 | 5.60 | 0.10 | 0 | 5.00 | 0.50 | 815 | 1.087 |
| III-64 | 0.70 | 0.10 | 0 | 0.50 | 0.10 | 804 | 1.072 |
| III-65 | 5.60 | 0.10 | 0 | 0.50 | 5.00 | 810 | 1.080 |
| III-66 | 1.10 | 0.10 | 0 | 0.50 | 0.50 | 805 | 1.073 |
| III-67 | 7.60 | 0.10 | 0 | 0.50 | 7.00 | 755 | 1.007 |
| III-68 | 0.70 | 0.50 | 0 | 0.10 | 0.10 | 805 | 1.073 |
| III-69 | 1.10 | 0.50 | 0 | 0.10 | 0.50 | 808 | 1.077 |
| III-70 | 5.60 | 0.50 | 0 | 0.10 | 5.00 | 818 | 1.091 |
| III-71 | 7.60 | 0.50 | 0 | 0.10 | 7.00 | 752 | 1.003 |
| III-72 | 5.60 | 0.50 | 0 | 5.00 | 0.10 | 814 | 1.085 |
| III-73 | 6.00 | 0.50 | 0 | 5.00 | 0.50 | 806 | 1.075 |
| III-74 | 1.10 | 0.50 | 0 | 0.50 | 0.10 | 800 | 1.067 |
| III-75 | 1.50 | 0.50 | 0 | 0.50 | 0.50 | 825 | 1.100 |
| III-76 | 6.00 | 0.50 | 0 | 0.50 | 5.00 | 799 | 1.065 |
| III-77 | 7.60 | 0.50 | 0 | 7.00 | 0.10 | 755 | 1.007 |
| III-78 | 5.20 | 5.00 | 0 | 0.10 | 0.10 | 820 | 1.093 |
| III-79 | 5.60 | 5.00 | 0 | 0.10 | 0.50 | 819 | 1.092 |
| III-80 | 5.60 | 5.00 | 0 | 0.50 | 0.10 | 805 | 1.073 |
| III-81 | 6.00 | 5.00 | 0 | 0.50 | 0.50 | 800 | 1.067 |
| III-82 | 7.20 | 7.00 | 0 | 0.10 | 0.10 | 770 | 1.027 |
| III-83 | 7.60 | 7.00 | 0 | 0.10 | 0.50 | 755 | 1.007 |

| | | | | | | | |
|---|---|---|---|---|---|---|---|
| *1: Value based on 100 parts by mass of cycloolefin polymer *2: Ratio with respect to breakdown field strength of monomer-free sample No. III-1 defined as 1 | | | | | | | |

**Table 6**

| Sample No. | Monomer | | | | Metal alkoxide | | Breakdown field strength | |
|---|---|---|---|---|---|---|---|---|
| | Total | Phenol monomer (AO-50) | Sulfur monomer (AO-412S) | Phosphorus monomer (2112) | | | Measured value | Ratio^{*2} |
| | Part by mass*1 | Part by mass*1 | Part by mass*1 | Part by mass*1 | Type | Part by mass*1 | V/µm | - |
| IV-1 | 5.00 | 5.00 | 0 | 0 | Zirconium (IV) butoxide (Zr-n-but) | 1.0 | 830 | 1.107 |
| IV-2 | 5.00 | 5.00 | 0 | 0 | | 3.0 | 840 | 1.120 |
| IV-3 | 5.00 | 5.00 | 0 | 0 | | 5.0 | 833 | 1.111 |
| IV-4 | 5.00 | 5.00 | 0 | 0 | | 10.0 | 830 | 1.107 |
| IV-5 | 5.00 | 0 | 5.00 | 0 | | 1.0 | 840 | 1.120 |
| IV-6 | 5.00 | 0 | 5.00 | 0 | | 3.0 | 842 | 1.123 |
| IV-7 | 5.00 | 0 | 5.00 | 0 | | 5.0 | 839 | 1.119 |
| IV-8 | 5.00 | 0 | 5.00 | 0 | | 10.0 | 834 | 1.112 |
| IV-9 | 5.00 | 0 | 0 | 5.00 | | 1.0 | 845 | 1.127 |
| IV-10 | 5.00 | 0 | 0 | 5.00 | | 3.0 | 846 | 1.128 |
| IV-11 | 5.00 | 0 | 0 | 5.00 | | 5.0 | 843 | 1.124 |
| IV-12 | 5.00 | 0 | 0 | 5.00 | | 10.0 | 840 | 1.120 |
| IV-13 | 5.50 | 0.50 | 5.00 | 0 | | 1.0 | 850 | 1.133 |
| IV-14 | 5.50 | 0.50 | 5.00 | 0 | | 3.0 | 855 | 1.140 |
| IV-15 | 5.50 | 0.50 | 5.00 | 0 | | 5.0 | 854 | 1.139 |
| IV-16 | 5.50 | 0.50 | 5.00 | 0 | | 10.0 | 848 | 1.131 |
| IV-17 | 5.00 | 5.00 | 0 | 0 | Acetoalkoxy aluminum diisopropylate (AI-M) | 1.0 | 830 | 1.107 |
| IV-18 | 5.00 | 5.00 | 0 | 0 | | 3.0 | 840 | 1.120 |
| IV-19 | 5.00 | 5.00 | 0 | 0 | | 5.0 | 835 | 1.113 |
| IV-20 | 5.00 | 0 | 5.00 | 0 | | 1.0 | 850 | 1.133 |
| IV-21 | 5.00 | 0 | 5.00 | 0 | | 3.0 | 840 | 1.120 |
| IV-22 | 5.00 | 0 | 5.00 | 0 | | 5.0 | 843 | 1.124 |
| IV-23 | 5.00 | 0 | 0 | 5.00 | | 1.0 | 840 | 1.120 |
| IV-24 | 5.00 | 0 | 0 | 5.00 | | 3.0 | 848 | 1.131 |
| IV-25 | 5.00 | 0 | 0 | 5.00 | | 5.0 | 842 | 1.123 |
| IV-26 | 5.50 | 0.50 | 5.00 | 0 | | 1.0 | 848 | 1.131 |
| IV-27 | 5.50 | 0.50 | 5.00 | 0 | | 3.0 | 854 | 1.139 |
| IV-28 | 5.50 | 0.50 | 5.00 | 0 | | 5.0 | 850 | 1.133 |
| IV-29 | 5.00 | 5.00 | 0 | 0 | Tetraethoxysilane (TEOS) | 1.0 | 820 | 1.093 |
| IV-30 | 5.00 | 5.00 | 0 | 0 | | 3.0 | 825 | 1.100 |
| IV-31 | 5.00 | 5.00 | 0 | 0 | | 5.0 | 824 | 1.099 |
| IV-32 | 5.00 | 0 | 5.00 | 0 | | 1.0 | 840 | 1.120 |
| IV-33 | 5.00 | 0 | 5.00 | 0 | | 3.0 | 844 | 1.125 |
| IV-34 | 5.00 | 0 | 5.00 | 0 | | 5.0 | 839 | 1.119 |
| IV-35 | 5.00 | 0 | 0 | 5.00 | | 1.0 | 830 | 1.107 |
| IV-36 | 5.00 | 0 | 0 | 5.00 | | 3.0 | 834 | 1.112 |
| IV-37 | 5.00 | 0 | 0 | 5.00 | | 5.0 | 829 | 1.105 |
| IV-38 | 5.50 | 0.50 | 5.00 | 0 | | 1.0 | 850 | 1.133 |
| IV-39 | 5.50 | 0.50 | 5.00 | 0 | | 3.0 | 844 | 1.125 |
| IV-40 | 5.50 | 0.50 | 5.00 | 0 | | 5.0 | 848 | 1.131 |
| IV-41 | 5.00 | 5.00 | 0 | 0 | Titanium (IV) butoxide (Ti-n-but) | 1.0 | 821 | 1.095 |
| IV-42 | 5.00 | 5.00 | 0 | 0 | | 3.0 | 827 | 1.103 |
| IV-43 | 5.00 | 5.00 | 0 | 0 | | 5.0 | 824 | 1.099 |
| IV-44 | 5.00 | 0 | 5.00 | 0 | | 1.0 | 845 | 1.127 |
| IV-45 | 5.00 | 0 | 5.00 | 0 | | 3.0 | 848 | 1.131 |
| IV-46 | 5.00 | 0 | 5.00 | 0 | | 5.0 | 850 | 1.133 |
| IV-47 | 5.00 | 0 | 0 | 5.00 | | 1.0 | 834 | 1.112 |
| IV-48 | 5.00 | 0 | 0 | 5.00 | | 3.0 | 839 | 1.119 |
| IV-49 | 5.00 | 0 | 0 | 5.00 | | 5.0 | 830 | 1.107 |
| IV-50 | 5.50 | 0.50 | 5.00 | 0 | | 1.0 | 855 | 1.140 |
| IV-51 | 5.50 | 0.50 | 5.00 | 0 | | 3.0 | 850 | 1.133 |
| IV-52 | 5.50 | 0.50 | 5.00 | 0 | | 5.0 | 852 | 1.136 |

| | | | | | | | | |
|---|---|---|---|---|---|---|---|---|
| *1: Value based on 100 parts by mass of cycloolefin polymer *2: Ratio with respect to breakdown field strength of monomer-free sample No. III-1 defined as 1 | | | | | | | | |

As seen in Tables 4 and 5, the sample employing the dielectric film containing cycloolefin polymer as polymer and also a predetermined amount of at least one of phenol monomer, sulfur monomer, and phosphorus monomer (Sample Nos. III-2 through 111-11, III-13 through III-17, III-19 through III-23, and III-25 through III-83) was higher in breakdown field strength than the monomer-free sample No. III-1.

Moreover, as seen in Table 6, each of the samples further containing metal alkoxide present in the dielectric film was higher in breakdown field strength than the corresponding sample which had the same monomer content but contains no metal alkoxide (Sample Nos. III-5, III-16, III-22, and III-31 in Tables 3 and 4).

### Reference Signs List

A, B: Film capacitor
C: Combination type capacitor
D: Inverter
E: Electric vehicle
1, 1a, 1b: Dielectric film
3, 3a, 3b: Electrode film
5, 5a, 5b: Metalized film
6: Main body
7, 7a, 7b: External electrode
8: Lead wire
9: Outer casing member
21, 23: Bus bar
31: Bridge circuit
33: Capacitance member
35: Booster circuit
41: Motor
43: Engine
45: Transmission
47: Inverter
49: Power supply
51a: Front wheel
51b: Rear wheel
53: Vehicle ECU
55: Ignition key
57: Engine ECU

## Claims

1. A dielectric film, comprising:
an organic resin polymer;
an organic resin component; and
a volatile organic component,
the organic resin polymer including at least one of polyarylate and cycloolefin polymer,
the organic resin component including at least one of a phenol compound having a methyl group or butyl group at the ortho position of the phenylene ring, a sulfur compound having propionate ester-bound divalent sulfur atoms, and a phosphorus compound containing phosphite ester,
the volatile organic component including at least one of cyclohexane, ethyl-cyclohexane, toluene, xylene, chloroform, and tetrahydrofuran,
a total content of the organic resin component falling in a range of 0.01 to 7.6 parts by mass in which a content of the organic resin polymer is 100 parts by mass, and
a total content of the volatile organic component in the dielectric film falling in a range of 0.01% to 7% by mass.

2. The dielectric film according to claim 1, wherein the organic resin polymer is polyarylate, and
the total content of the organic resin component falls in a range of 0.01 to 4.6 parts by mass.

3. The dielectric film according to claim 2, wherein a content of the phenol compound falls in a range of 0.1 to 4.0 parts by mass.

4. The dielectric film according to claim 2 or 3, wherein a content of the sulfur compound falls in a range of 0.5 to 4.0 parts by mass.

5. The dielectric film according to any one of claims 2 to 4, wherein a content of the phosphorus compound falls in a range of 0.1 to 4.0 parts by mass.

6. The dielectric film according to claim 1, wherein the organic resin polymer is cycloolefin polymer, and
the total content of the organic resin component falls in a range of 0.05 to 7.6 parts by mass.

7. The dielectric film according to claim 6, wherein a content of the phenol compound falls in a range of 0.5 to 5.0 parts by mass.

8. The dielectric film according to claim 6 or 7, wherein a content of the sulfur compound falls in a range of 0.1 to 5.0 parts by mass.

9. The dielectric film according to any one of claims 6 to 8, wherein a content of the phosphorus compound falls in a range of 0.5 to 7.0 parts by mass.

10. The dielectric film according to any one of claims 1 to 9, further comprising:
metal alkoxide,
wherein a content of the metal alkoxide falls in a range of 1.0 to 10.0 parts by mass based on 100 parts by mass of the organic resin polymer.

11. A film capacitor, comprising:
the dielectric film according to any one of claims 1 to 10; and
an electrode film formed on a principal face of the dielectric film.

12. A combination type capacitor, comprising:
a plurality of the film capacitors according to claim 11; and
at least one bus bar connecting all of the plurality of the film capacitors.

13. An inverter, comprising:
a bridge circuit including switching elements; and
a capacitance member connected to the bridge circuit,
the capacitance member including the film capacitor according to claim 11.

14. An inverter, comprising:
a bridge circuit including switching elements; and
a capacitance member connected to the bridge circuit,
the capacitance member including the combination type capacitor according to claim 12.

15. An electric vehicle, comprising:
a power supply;
an inverter connected to the power supply;
a motor connected to the inverter; and
wheels driven by the motor,
the inverter being the inverter according to claim 13 or 14.

## Patentansprüche

1. Dielektrischer Film, aufweisend:
ein organisches Harzpolymer,
eine organische Harzkomponente und
eine flüchtige organische Komponente,
wobei das organische Harzpolymer mindestens eines von Polyarylat und Cycloolefinpolymer aufweist,
wobei die organische Harzkomponente mindestens eines von einer Phenolverbindung, die eine Methylgruppe oder Butylgruppe an der ortho-Position des Phenylenrings hat, einer Schwefelverbindung, die Propionatester-gebundene zweiwertige Schwefelatome hat, und einer Phosphorverbindung, die Phosphitester enthält, aufweist,
wobei die flüchtige organische Komponente mindestens eines von Cyclohexan, Ethylcyclohexan, Toluol, Xylol, Chloroform und Tetrahydrofuran aufweist,
wobei ein Gesamtgehalt der organischen Harzkomponente in einem Bereich von 0,01 bis 7,6 Masseteilen liegt, wobei ein Gehalt des organischen Harzpolymers 100 Masseteile beträgt, und
wobei ein Gesamtgehalt der flüchtigen organischen Komponente in dem dielektrischen Film in einem Bereich von 0,01 Masse-% bis 7 Masse-% liegt.

2. Dielektrischer Film gemäß Anspruch 1, wobei das organische Harzpolymer Polyarylat ist und
der Gesamtgehalt der organischen Harzkomponente in einem Bereich von 0,01 bis 4,6 Masseteilen liegt.

3. Dielektrischer Film gemäß Anspruch 2, wobei ein Gehalt der Phenolverbindung in einem Bereich von 0,1 bis 4,0 Masseteilen liegt.

4. Dielektrischer Film gemäß Anspruch 2 oder 3, wobei ein Gehalt der Schwefelverbindung in einem Bereich von 0,5 bis 4,0 Masseteilen liegt.

5. Dielektrischer Film gemäß irgendeinem der Ansprüche 2 bis 4, wobei ein Gehalt der Phosphorverbindung in einem Bereich von 0,1 bis 4,0 Masseteilen liegt.

6. Dielektrischer Film gemäß Anspruch 1, wobei das organische Harzpolymer ein Cycloolefinpolymer ist und
der Gesamtgehalt der organischen Harzkomponente in einem Bereich von 0,05 bis 7,6 Masseteilen liegt.

7. Dielektrischer Film gemäß Anspruch 6, wobei ein Gehalt der Phenolverbindung in einem Bereich von 0,5 bis 5,0 Masseteilen liegt.

8. Dielektrischer Film gemäß Anspruch 6 oder 7, wobei ein Gehalt der Schwefelverbindung in einem Bereich von 0,1 bis 5,0 Masseteilen liegt.

9. Dielektrischer Film gemäß irgendeinem der Ansprüche 6 bis 8, wobei ein Gehalt der Phosphorverbindung in einem Bereich von 0,5 bis 7,0 Masseteilen liegt.

10. Dielektrischer Film gemäß irgendeinem der Ansprüche 1 bis 9, ferner aufweisend:
Metallalkoxid,
wobei ein Gehalt des Metallalkoxids in einem Bereich von 1,0 bis 10,0 Masseteilen, bezogen auf 100 Masseteile des organischen Harzpolymers, liegt.

11. Folienkondensator, aufweisend:
den dielektrischen Film gemäß irgendeinem der Ansprüche 1 bis 10 und
einen Elektrodenfilm, der auf einer Hauptfläche des dielektrischen Films ausgebildet ist.

12. Kombinationstypkondensator, aufweisend:
eine Mehrzahl der Folienkondensatoren gemäß Anspruch 11 und
mindestens eine Sammelschiene, die alle der Mehrzahl der Folienkondensatoren verbindet.

13. Wechselrichter, aufweisend:
eine Brückenschaltung, die Schaltelemente aufweist, und
ein Kapazitätselement, das mit der Brückenschaltung verbunden ist,
wobei das Kapazitätselement den Folienkondensator gemäß Anspruch 11 aufweist.

14. Wechselrichter, aufweisend:
eine Brückenschaltung, die Schaltelemente aufweist, und
ein Kapazitätselement, das mit der Brückenschaltung verbunden ist,
wobei das Kapazitätselement den Kombinationstypkondensator gemäß Anspruch 12 aufweist.

15. Elektrisches Fahrzeug, aufweisend:
eine Leistungsversorgung,
einen Wechselrichter, der mit der Leistungsversorgung verbunden ist,
einen Elektromotor, der mit dem Wechselrichter verbunden ist, und
durch den Elektromotor angetriebene Räder,
wobei der Wechselrichter der Wechselrichter gemäß Anspruch 13 oder 14 ist.

## Revendications

1. Film diélectrique, comprenant :
un polymère de résine organique ;
un composant de résine organique ; et
un composant organique volatil,
le polymère de résine organique comprenant au moins l'un de polyarylate et de polymère de cyclooléfine,
le composant de résine organique comprenant au moins un parmi un composé phénolique ayant un groupe méthyle ou un groupe butyle en position ortho du cycle phénylène, un composé de soufre ayant des atomes de soufre divalents liés à l'ester de propionate, et un composé phosphoré contenant un ester de phosphite,
le composant organique volatil comprenant au moins l'un parmi le cyclohexane, l'éthyl-cyclohexane, le toluène, le xylène, le chloroforme et le tétrahydrofurane,
une teneur totale du composant de résine organique se situant dans une plage de 0,01 à 7,6 parties en masse, où une teneur du polymère de résine organique est de 100 parties en masse, et
une teneur totale du composant organique volatil dans le film diélectrique se situant dans une plage de 0,01 % à 7 % en masse.

2. Film diélectrique selon la revendication 1, dans lequel le polymère de résine organique est un polyarylate, et
la teneur totale du composant de résine organique se situe dans une plage de 0,01 à 4,6 parties en masse.

3. Film diélectrique selon la revendication 2, dans lequel une teneur en composé phénolique se situe dans une plage de 0,1 à 4,0 parties en masse.

4. Film diélectrique selon la revendication 2 ou 3, dans lequel une teneur en composé de soufre se situe dans une plage de 0,5 à 4,0 parties en masse.

5. Film diélectrique selon l'une quelconque des revendications 2 à 4, dans lequel une teneur en composé phosphoré se situe dans une plage de 0,1 à 4,0 parties en masse.

6. Film diélectrique selon la revendication 1, dans lequel le polymère de résine organique est un polymère de cyclooléfine, et
la teneur totale du composant de résine organique se situe dans une plage de 0,05 à 7,6 parties en masse.

7. Film diélectrique selon la revendication 6, dans lequel une teneur en composé phénolique se situe dans une plage de 0,5 à 5,0 parties en masse.

8. Film diélectrique selon la revendication 6 ou 7, dans lequel une teneur en composé de soufre se situe dans une plage de 0,1 à 5,0 parties en masse.

9. Film diélectrique selon l'une quelconque des revendications 6 à 8, dans lequel une teneur en composé phosphoré se situe dans une plage de 0,5 à 7,0 parties en masse.

10. Film diélectrique selon l'une quelconque des revendications 1 à 9, comprenant en outre :
un alcoxyde de métal,
dans lequel une teneur en alcoxyde de métal se situe dans une plage de 1,0 à 10,0 parties en masse sur la base de 100 parties en masse du polymère de résine organique.

11. Condensateur à film, comprenant :
le film diélectrique selon l'une quelconque des revendications 1 à 10 ; et
un film d'électrode formé sur une face principale du film diélectrique.

12. Condensateur de type combiné, comprenant :
une pluralité des condensateurs à film selon la revendication 11 ; et
au moins une barre omnibus reliant tous de la pluralité des condensateurs à film.

13. Onduleur, comprenant :
un circuit en pont comprenant des éléments de commutation ; et
un élément de capacité connecté au circuit en pont,
l'élément de capacité comprenant le condensateur à film selon la revendication 11.

14. Onduleur, comprenant :
un circuit en pont comprenant des éléments de commutation ; et
un élément de capacité connecté au circuit en pont,
l'élément de capacité comprenant le condensateur de type combiné selon la revendication 12.

15. Véhicule électrique, comprenant :
une alimentation électrique ;
un onduleur connecté à l'alimentation électrique ;
un moteur connecté à l'onduleur ; et
des roues entraînées par le moteur,
l'onduleur étant l'onduleur selon la revendication 13 ou 14.
